# EUROPÄISCHE PATENTSCHRIFT

(11) **EP 2 052 171 B1**
(45) Veröffentlichungstag und Bekanntmachung des Hinweises auf die Patenterteilung: **14.10.2009**
(21) Anmeldenummer: 07802585.5
(22) Anmeldetag: 13.08.2007
(51) Int. Cl.: F16J 15/32, F01D 11/00

(54) **Bürstendichtung für eine Strömungsmaschine und Strömungsmaschine mit einer solchen Bürstendichtung**
Brush seal for a turbomachine, and turbomachine with such a brush seal
Joint à brosse pour turbomachine et turbomachine avec un tel joint à brosse

(30) Priorität: 18.08.2006 EP 06017253
(43) Veröffentlichungstag der Anmeldung: 29.04.2009
(73) Patentinhaber: SIEMENS AKTIENGESELLSCHAFT, 80333 München (DE)
(72) Erfinder: BRÜCK, Stefan, 45470 Mülheim an der Ruhr (DE); NEEF, Matthias, 45468 Mülheim an der Ruhr (DE); SULDA, Erik, Hatfield, Massachusetts MA 01038-9770 (US); SÜRKEN, Norbert, 45468 Mülheim a.d. Ruhr (DE)
(86) Internationale Anmeldenummer: PCT/EP2007/058353
(87) Internationale Veröffentlichungsnummer: WO 2008/020002

(56) Entgegenhaltungen:
- EP-A1- 0 992 721
- EP-A2- 1 388 695
- GB-A- 2 355 049
- US-A- 885 032
- US-A- 5 106 104
- US-A- 5 201 530
- US-B1- 6 808 179

## Beschreibung

Die Erfindung betrifft eine Bürstendichtung für eine Strömungsmaschine zum Abdichten eines Spaltes zwischen einem rotierenden und einem stehenden Bauteil der Strömungsmaschine, bei der elastisch biegsame Borsten in mehreren, nebeneinander angeordneten Borstenreihen vorgesehen sind.

In Strömungsmaschinen mit rotierenden und stehenden Bauteilen werden Dichtelemente unterschiedlicher Bauart zur Abdichtung verschiedener Druckräume verwendet. Hierbei kommen zwischen den rotierenden und den stehenden Bauteilen insbesondere berührungslose Dichtungen (z. B. Labyrinthdichtungen) oder nachgiebige berührende Dichtelemente zum Einsatz. Zu nachgiebigen berührenden Dichtelementen werden unter anderem so genannte Bürstendichtungen gezählt, bei denen Borsten zur Abdichtung zwischen Räumen mit unterschiedlichen Drücken verwendet werden.

Während berührungslose Dichtungen zum Abdichten von Druckdifferenzen von einigen Millibar bis zu mehreren hundert bar geeignet sind, ist der Verwendungsbereich von Bürstendichtungen selbst bei mehrstufiger Anordnung (mehrere Bürstendichtungen hintereinander) aufgrund des "Blow-Over-Effektes" und eines "Auffächerns" in Bezug auf die maximale Druckdifferenz begrenzt.

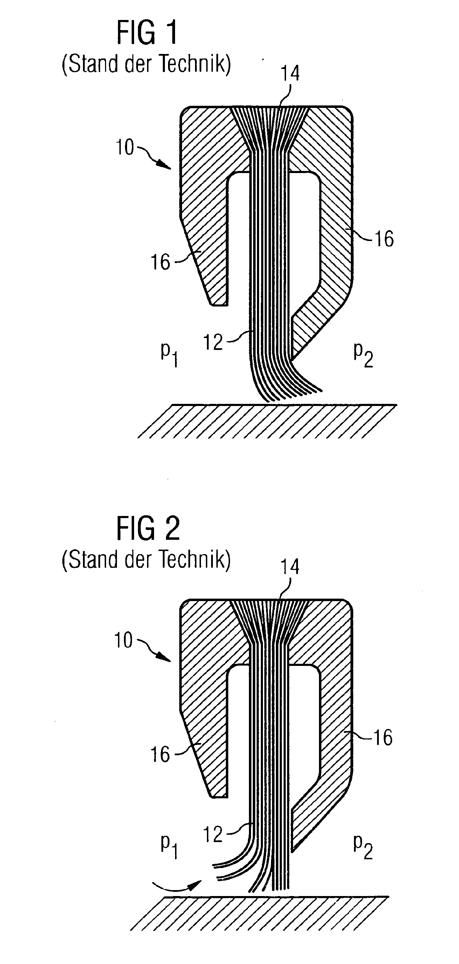

Der "Blow-Over-Effekt" ist in Fig. 1 durch eine Querschnittsdarstellung einer Bürstendichtung 10 gemäß dem Stand der Technik veranschaulicht. Bei dieser Bürstendichtung 10 sind Borsten 12 in mehreren Reihen angeordnet und in einem Grundkörper 14 befestigt. Der Grundkörper 14 ist an zwei gegenüberliegenden Seiten von je einem Führungsblech 16 eingefasst, von denen das in Fig. 1 rechts dargestellte Führungsblech 16 derart weit an den unteren Endbereich der Borsten 12 reicht, dass es die Borsten 12 dort abstützt. Bei einer entsprechend hohen Druckdifferenz "p₁ » p₂"an der Bürstendichtung 10 werden die Borsten 12 an diesem unteren Endbereich jedoch derart stark gebogen, dass Medium von dem in Fig. 1 linksseitigen Druckraum in den rechtsseitigen Druckraum überströmen kann.

In Fig. 2 ist das "Auffächern" einer Bürstendichtung 10 an einer Querschnittsdarstellung entsprechend der von Fig. 1 veranschaulicht. Beim "Auffächern" kommt es aufgrund einer ungünstigen Anströmung des unteren Endbereiches der Borsten 12 dazu, dass einzelne Borsten zum linksseitigen Druckraum hin aufbogen werden, sodass wiederum Medium aus diesem unter einem Druck p₁ stehenden Druckraum in den rechtsseitigen, unter einem niedrigeren Druck p₂ stehenden Druckraum gelangen kann.

Um die Leistungsfähigkeit bekannter Bürstendichtungen zu steigern, werden bei bisherigen Lösungen die einzelnen Borsten vergleichsweise dick ausgeführt, die einzelnen Borstenpakete durch ein Führungsblech bzw. einen Stützring gehalten (siehe Fig. 1 und 2, das rechte Führungsblech 16) und/oder das einzelne Borstenpaket insgesamt relativ breit bzw. dick ausgeführt.

Trotzdem sind der ertragbaren Druckdifferenz bekannter Bürstendichtungen weiterhin die oben genannten Grenzen gesetzt. Insbesondere können aufgrund des notwendigen Radialspiels zwischen den rotierenden und stehenden Bauteilen die Borsten mit einem Führungsblech bzw. einem Stützring nicht beliebig nah an einem gegenüberliegenden Bauteil abgestützt werden.

Eine aus EP 992721 und US5106104 bekannte

Bürstendichtung für eine Strömungsmaschine zum Abdichten eines Spaltes zwischen einem rotierenden und einem stehenden Bauteil der Strömungsmaschine weist die eingangs genannten elastisch biegsamen Borsten in mehreren, nebeneinander angeordneten Borstenreihen auf, wobei die erfindungsgemäße Bürstendichtung einstufig ausgebildet ist. Zwischen mindestens zwei Borstenreihen ist darüber hinaus eine Folie oder eine Scheibe bzw. Membran angeordnet, welche sich in Längsrichtung der Borsten erstreckt.

Es ist Aufgabe der vorliegenden Erfindung, eine Bürstendichtung der eingangs genannten Art dahingehend zu verbessern, dass bei einer damit ausgerüsteten Strömungsmaschine höhere Druckdifferenzen abgedichtet werden können.

Die Aufgabe ist erfindungsgemäß mit einer Bürstendichtung gemäß Anspruch 1 und einer Strömungsmaschine gemäß Anspruch 13. gelöst. Vorteilhafte Weiterbildungen der Erfindung sind in den abhängigen Ansprüchen definiert.

Die erfindungsgemäße Folie oder Scheibe besteht aus einem Material mit abrasiven Eigenschaften. So kann die Folie oder die Scheibe genau so lang wie die Borsten sein, wodurch die Steifigkeit der Borstenspitzen vergrößert wird und dadurch ein Umknicken der Borsten um die Kante des Führungsblechs stark vermindert wird.

Eine einstufige Bürstendichtung zeichnet sich dadurch aus, dass mehrere Borsten im Wesentlichen berührend über ihre Länge angeordnet sind und dadurch ein Borstenpaket gebildet wird. Somit zeichnet sich eine einstufige Bürstendichtung durch ein mehrere eng beieinander liegenden Borsten umfassendes Borstenpaket aus.
Ein weiteres Merkmal einer einstufigen Bürstendichtung ist die Befestigung der Borsten in einem Bürstendichtungshalter, wobei die im Bürstendichtungshalter angeordneten Borstenenden eng beieinander liegen.
Mehrstufige Bürstendichtungen zeichnen sich durch zumindest zwei räumlich getrennte und hintereinander angeordnete Borstenpakete aus, wobei die jeweiligen Borstenpakete sich in der Regel nicht berühren.

Die Bürstendichtung gemäß der Erfindung weist also zwischen den einzelnen Borstenreihen seiner Borstenpakete mindestens eine Zwischenlage in Form einer Folie oder einer Scheibe auf. Die Scheibe kann dabei insbesondere ein dünnes Blech sein. Mit den derartigen erfindungsgemäßen Folien bzw. Scheiben wird erreicht, dass sich die einzelnen Borsten und erfindungsgemäßen Zwischenlagen gegenseitig stützen. Die Gefahr eines Umknickens von Borsten um die Kante eines Führungsbleches (siehe Fig. 1) oder eines Auffächerns von Borsten (siehe Fig. 2) ist erfindungsgemäß stark vermindert. Auf diese Weise ist die erfindungsgemäße Bürstendichtung auch für höhere Druckdifferenzen geeignet. Das Auffächern einzelner Borsten durch eine drallbehaftete Anströmung einer Bürstendichtung kann mit den erfindungsgemäßen Folien oder Scheiben insbesondere einströmseitig vermindert werden.

Um die erfindungsgemäße Folie oder Scheibe an der Büstendichtung kostengünstig anbringen und dauerhaft haltern zu können, ist es bevorzugt die Borsten mit einem Endbereich an einem Grundkörper ortsfest anzubringen und die Folie oder die Scheibe mit einem Randbereich ebenfalls mittels diesem Grundkörper zwischen den Borsten zu halten.

Die Folie oder die Scheibe ist hierbei vorteilhafterweise aus einer Metall-Matrix oder aus Graphit hergestellt.

Die erfindungsgemäße Folie oder Scheibe ist bevorzugt aus Kunststoff und/oder Metall hergestellt. Mit derartigen Materialen können die gewünschten Stützeffekte je nach erforderlicher Betriebstemperatur der Bürstendichtung kostengünstig erzielt werden.

Darüber hinaus ist es erfindungsgemäß bevorzugt die Folie oder die Scheibe zumindest abschnittsweise perforiert und/oder zumindest abschnittsweise geschlitzt zu gestalten. Mit derartigen Bürstendichtungen kann der "Blow-Down-Effekt" der Bürstendichtung (d.h. das Schließen der Bürstendichtung durch radiale Druckkräfte auf das zugehörige Borstenpaket) aufrechterhalten werden.

Schließlich ist es erfindungsgemäß bevorzugt, die Folie oder die Scheibe hinsichtlich der Längserstreckung der Borsten genauso lang wie diese und/oder kürzer als diese zu gestalten. Ferner lässt sich die erfindungsgemäße Packung von Borsten mit zugehöriger Folie oder Scheibe beliebig oft stapeln und beliebig dick ausführen. Die Anzahl von Folien oder Scheiben sowie deren einzelnen Dicke kann je nach Anforderung an die Dichtsituation variiert werden. Die Folien oder Scheiben können zusammen mit den zugehörigen Borsten vergossen, eingespritzt, verschweißt, gewickelt und/oder geklemmt ausgeführt werden.

Bevorzugt weist die Folie oder die Scheibe eine Struktur zum Stützen der Borsten auf. Durch diese vergleichsweise leicht herstellbare Maßnahme kann die Steifigkeit des Blechs weiter erhöht werden. Dabei wird die Folie oder die Scheibe in ihrer Längsrichtung im Wesentlichen geknickt, um damit ein Verbiegen zu vermeiden.
Vorteilhafterweise wird die Folie oder die Scheibe sinusförmig, U-förmig oder dreieckförmig gewellt ausgebildet.

Nachfolgend wird ein Ausführungsbeispiel einer erfindungsgemäßen Bürstendichtung anhand der beigefügten schematischen Zeichnungen näher erläutert.

### Es zeigt:

- Fig. 1: einen Querschnitt einer Bürstendichtung gemäß dem Stand der Technik zur obigen Erläuterung des "Blow-Over-Effektes",
- Fig. 2: einen Querschnitt einer Bürstendichtung gemäß dem Stand der Technik zur obigen Erläuterung des "Auf-fächerns",
- Fig. 3: einen Querschnitt und darunter eine teilweise perspektivische Ansicht eines Ausführungsbeispiels einer Bürstendichtung gemäß dem Stand der Technik, welches jenem der Fig. 1 und 2 entspricht,
- Fig. 4: einen Querschnitt eines weiteren Ausführungsbeispiels einer Bürstendichtung gemäß dem Stand der Technik,
- Fig. 5: einen Querschnitt und darunter eine teilweise perspektivische Ansicht eines Ausführungsbeispiels einer erfindungsgemäßen Bürstendichtung, welche auf einer Bürstendichtung gemäß Fig. 3 basiert,
- Fig. 6: einen Querschnitt eines weiteren Ausführungsbeispiels einer erfindungsgemäßen Bürstendichtung, welche auf einer Bürstendichtung gemäß Fig. 4 basiert,
- Fig. 7: eine teilweise perspektivische Ansicht eines Ausführungsbeispiels einer erfindungsgemäßen Bürstendichtung mit einer gewellten Struktur der Scheibe,
- Fig. 8: eine Ansicht von unten in Längsrichtung der Borsten gesehen eines Ausführungsbeispiels einer erfindungsgemäßen Bürstendichtung,
- Fig. 9: eine Ansicht von unten in Längsrichtung der Borsten gesehen eines Ausführungsbeispiel einer erfindungsgemäßen Bürstendichtung,
- Fig. 10: eine Ansicht von unten in Längsrichtung der Borsten gesehen eines Ausführungsbeispiels einer erfindungsgemäßen Bürstendichtung,
- Fig. 11: eine Ansicht von unten in Längsrichtung der Borsten gesehen eines Ausführungsbeispiels einer erfindungsgemäßen Bürstendichtung.

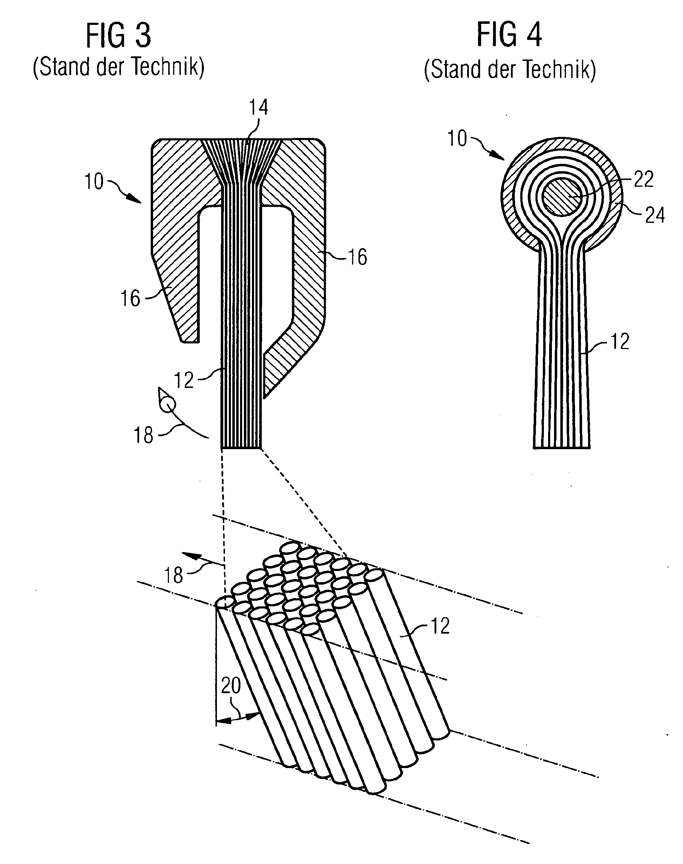

In Fig. 3 ist eine Bürstendichtung 10 des Standes der Technik veranschaulicht, welche sich im Wesentlichen parallel erstreckende Borsten 12 aufweist, die zusammen ein Borstenpaket bilden. Die Borsten 12 sind in einen Grundkörper 14 eingegossen, der sich zwischen zwei Führungsblechen 16 befindet. Die Führungsbleche 16 erstrecken sich einzeln in Längsrichtung der Borsten 12, wobei das bezogen auf Fig. 3 rechtsseitige Führungsblech 16 mit seinem unteren Endbereich in Richtung zu den Borsten 12 gekrümmt ist und die Borsten 12 an deren unteren Endbereich abstützt. Beim Rotieren der derartigen Bürstendichtung 10 in Richtung eines Pfeils 18 erfahren die bezogen auf Fig. 3 unteren Endbereiche der Borsten 12 einen Reibungswiderstand an einem (in den Fig. 3 bis 6 jeweils nicht dargestellten) gegenüberliegenden stehenden Bauteil, und die Borsten 12 werden dadurch entgegen ihrer Hauptbewegungsrichtung um einen Winkel 20 gekrümmt.

In Fig. 4 ist ein Ausführungsbeispiel einer Bürstendichtung 10 gemäß dem Stand der Technik veranschaulicht, bei dem Borsten 12 um einen zentralen Draht 22 gelegt und außenseitig von einer im Querschnitt im wesentlichen kreisförmigen Schale 24 umfasst sind. Die Borsten 12 ragen aus dieser Schale 24 bezogen auf Fig. 4 nach unten in Richtung auf ein (nicht dargestelltes) stehendes Bauteil heraus.

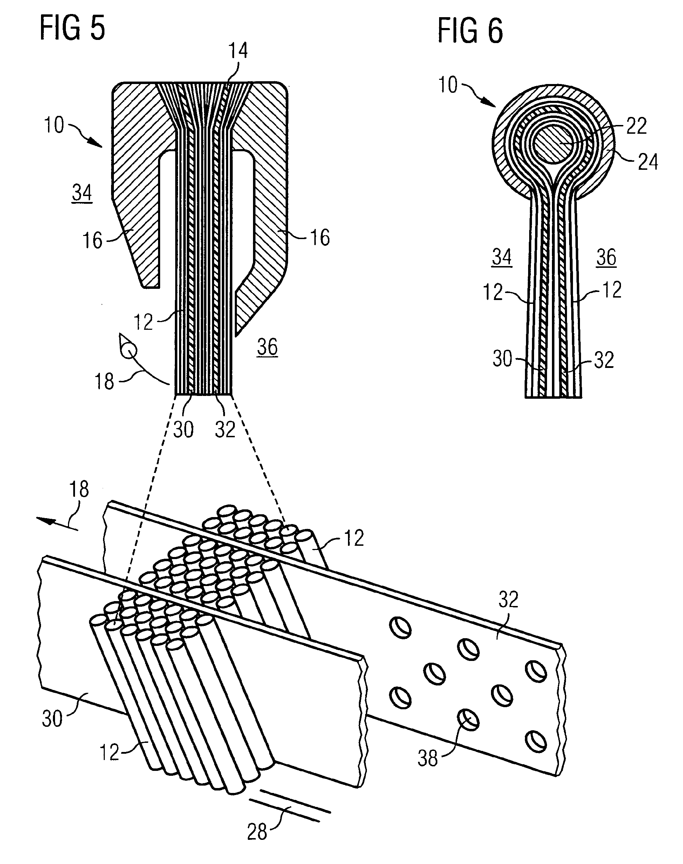

In Fig. 5 ist ein Ausführungsbeispiel einer Bürstendichtung 10 gemäß der Erfindung veranschaulicht, welche ebenfalls Borsten 12, einen Grundkörper 14 sowie zwei Führungsbleche 16 aufweist. Die Bürstendichtung 10 rotiert ebenfalls in Richtung eines Pfeils 18. Die Borsten 12 sind dabei im wesentlich parallel zueinander in Borstenreihen 28 angeordnet und zwischen diesen Borstenreihen 28 befinden sich insgesamt zwei Folien 30 und 32. Die dabei einem Druckraum 34 mit vergleichsweise niedrigem Druck zugewandte Folie 30 ist in ihrer Folienfläche geschlossen ausgebildet. Hingegen ist die Folie 32, welche einen Druckraum 36 mit vergleichsweise hohem Druck zugewandt ist, mittels Öffnungen 38 perforiert ausgestaltet.

Die Fig. 5 zeigt eine einstufige Bürstendichtung 10. Die zwei Folien 30 und 32 sind aus einem Material mit abrasiven Eigenschaften hergestellt. Als abrasives Material kann hierbei eine Metall-Matrix oder Graphit dienen.

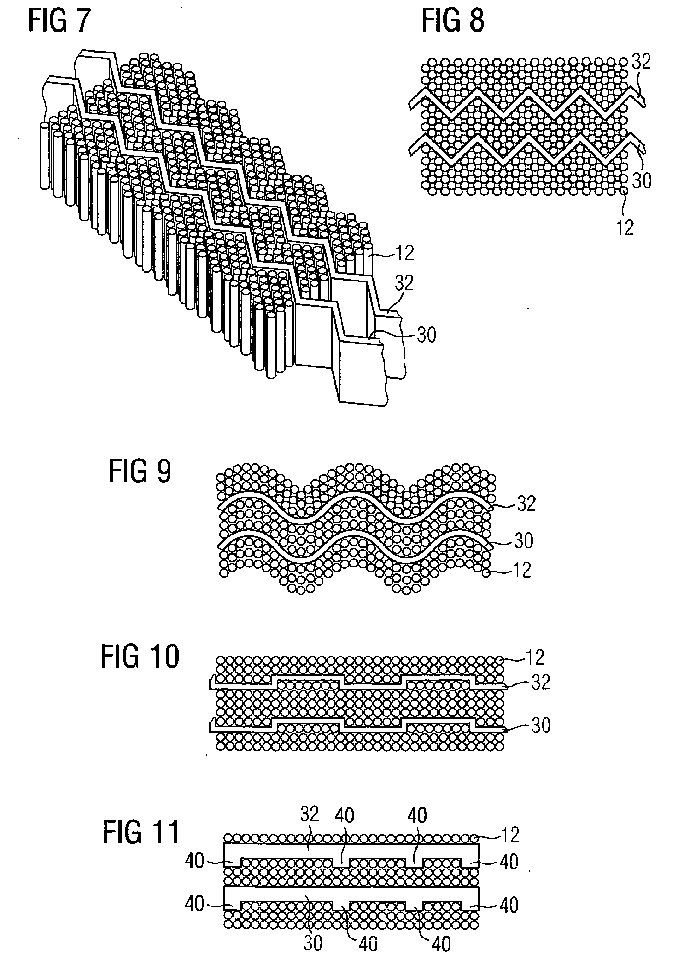

Die Fig. 7 zeigt eine erfindungsgemäße Bürstendichtung, wobei die Folie 30, 32 eine Struktur zum Stützen der Borsten 12 aufweist. Die perspektivische Darstellung der Bürstendichtung gemäß Fig. 7 zeigt eine dreieckförmige Struktur der Folie 30, 32.
In der Fig. 8 ist die dreieckförmige Struktur von unten gezeigt.
Die Fig. 9 und die Fig. 10 zeigen eine sinusförmige bzw. eine U-förmige Struktur der Folie 30, 32. Die Folie 30, 32 gemäß Fig. 11 wird durch in Längsrichtung der Borsten ausgebildete Stege 40 verbessert, wobei die Steifigkeit der Folie 30, 32 erhöht wird.

In Fig. 6 ist ein weiteres Ausführungsbeispiel einer erfindungsgemäßen Bürstendichtung 10 dargestellt, welches hinsichtlich Borsten 12, einem Draht 22 und einer Schale 24 wie das in Fig. 4 dargestellte Ausführungsbeispiel des Standes der Technik gestaltet ist. Zwischen den um den Draht 22 gelegten Borsten 12 befindet sich bei dem Ausführungsbeispiel gemäß Fig. 6 jedoch ferner eine Folie 30, sodass sich im Bereich der aus der Schale 24 herausragenden Borsten wiederum die in Fig. 5 unten perspektivisch veranschaulichte Schichtung von Borsten 12 und Folie/n 30 bzw. 32 ergibt.

## Patentansprüche

1. Einstufige Bürstendichtung (10) für eine Strömungsmaschine zum Abdichten eines Spaltes zwischen einem rotierenden und einem stehenden Bauteil der Strömungsmaschine, bei der elastisch biegsame Borsten (12) in mehreren, nebeneinander angeordneten Borstenreihen (28) vorgesehen sind, wobei zwischen mindestens zwei Borstenreihen (28) eine Folie (30, 32) oder eine Scheibe angeordnet ist, welche sich in Längsrichtung der Borsten (12) erstreckt,
**dadurch gekennzeichnet, dass**
die Folie (30, 32) oder die Scheibe aus einem Material mit abrasiven Eigenschaften besteht.

2. Bürstendichtung nach Anspruch 1,
**dadurch gekennzeichnet, dass**
die Borsten (12) mit einem Endbereich an einem Grundkörper (14) ortsfest angebracht sind und die Folie (30, 32) oder die Scheibe mit einem Randbereich ebenfalls mit diesem Grundkörper (14) zwischen den Borsten (12) gehalten ist.

3. Bürstendichtung nach Anspruch 1,
wobei die Folie (30, 32) oder die Scheibe aus einer Metall-Matrix oder aus Graphit hergestellt ist.

4. Bürstendichtung nach Anspruch 1 oder 2,
**dadurch gekennzeichnet; dass**
die Folie (30, 32) oder die Scheibe aus Kunststoff hergestellt ist.

5. Bürstendichtung nach Anspruch 1 oder 2,
**dadurch gekennzeichnet, dass**
die Folie (30, 32) oder die Scheibe aus Metall hergestellt ist.

6. Bürstendichtung nach einem der vorhergehenden Ansprüche,
**dadurch gekennzeichnet; dass**
die Folie (30, 32) oder die Scheibe zumindest abschnittsweise perforiert gestaltet ist.

7. Bürstendichtung nach einem der vorhergehenden Ansprüche,
**dadurch gekennzeichnet, dass**
die Folie (30, 32) oder die Scheibe zumindest abschnittsweise geschlitzt gestaltet ist.

8. Bürstendichtung nach einem der vorhergehenden Ansprüche,
**dadurch gekennzeichnet, dass**
die Folie (30, 32) oder die Scheibe hinsichtlich der Längserstreckung der Borsten (12) genauso lang wie diese gestaltet ist.

9. Bürstendichtung nach einem der vorhergehenden Ansprüche,
**dadurch gekennzeichnet, dass**
die Folie (30, 32) oder die Scheibe hinsichtlich der Längserstreckung der Borsten (12) kürzer als diese gestaltet ist.

10. Bürstendichtung nach einem der vorhergehenden Ansprüche,
wobei die Folie (30, 32) oder die Scheibe eine Struktur zum Stützen der Borsten aufweist.

11. Bürstendichtung nach Anspruch 10,
wobei die Folie (30, 32) oder die Scheibe gewellt ist.

12. Bürstendichtung nach Anspruch 11,
wobei die Folie (30, 32) oder die Scheibe sinusförmig, U-förmig oder dreieckförmig gewellt ist.

13. Strömungsmaschine mit einer Bürstendichtung (10) nach einem der Ansprüche 1 bis 7.

## Claims

1. Single-stage brush seal (10) for a turbo-machine for sealing off a gap between a rotating and a stationary component of the turbo-machine, in which brush seal the elastically flexible bristles (12) are provided in a plurality of bristle rows (28) arranged next to one another, a film (30, 32) or a disk, which extends in the longitudinal direction of the bristles (12), being arranged between at least two bristle rows (28), **characterized in that** the film (30, 32) or disk consists of a material having abrasive properties.

2. Brush seal according to Claim 1, **characterized in that** the bristles (12) are attached fixedly with an end region to a basic body (14), and the film (30, 32) or disk is held with a marginal region between the bristles (12), likewise by means of this basic body (14).

3. Brush seal according to Claim 1, the film (30, 32) or disk being produced from a metal matrix or from graphite.

4. Brush seal according to Claim 1 or 2, **characterized in that** the film (30, 32) or disk is produced from plastic.

5. Brush seal according to Claim 1 or 2, **characterized in that** the film (30, 32) or disk is produced from metal.

6. Brush seal according to one of the preceding claims, **characterized in that** the film (30, 32) or disk has at least in portions a perforated configuration.

7. Brush seal according to one of the preceding claims, **characterized in that** the film (30, 32) or disk has at least in portions a slotted configuration.

8. Brush seal according to one of the preceding claims, **characterized in that** the film (30, 32) or disk has, in terms of the longitudinal extent of the bristles (12), a configuration exactly as long as these.

9. Brush seal according to one of the preceding claims, **characterized in that** the film (30, 32) or disk has, in terms of the longitudinal extent of the bristles (12), a configuration shorter than these.

10. Brush seal according to one of the preceding claims, the film (30, 32) or disk having a structure for supporting the bristles.

11. Brush seal according to Claim 10, the film (30, 32) or disk being wavy.

12. Brush seal according to Claim 11, the film (30, 32) or disk being wavy in a sinusoidal, U-shaped or triangular manner.

13. Turbo-machine having a brush seal (10) according to one of Claims 1 to 7.

## Revendications

1. Joint ( 10 ) à brosse à un étage pour une turbomachine, pour rendre étanche un intervalle entre un élément tournant et un élément fixe de la turbomachine, dans lequel il est prévu des soies ( 12 ) souples élastiquement en plusieurs rangées ( 28 ) de soies disposées les unes à côté des autres, dans lequel entrent au moins deux rangées ( 28 ) de soie est disposée une feuille ( 30, 32 ) ou un disque,
qui s'étend dans la direction longitudinale des soies ( 12 )
**caractérisé en ce que**
la feuille ( 30, 32 ) ou le disque est en un matériau ayant des propriétés abrasives.

2. Joint à brosse suivant la revendication 1,
**caractérisé en ce que**
les soies sont mises à poste fixe par une partie d'extrémité sur un corps ( 14 ) de base et la feuille ( 30, 32 ) ou le disque est maintenu entre les soies ( 12 ) par une partie de bord également par ce corps ( 14 ) de base.

3. Joint à brosse suivant la revendication 1,
dans lequel la feuille ( 30, 32 ) ou le disque est en une matrice métallique ou est en graphite.

4. Joint à brosse suivant la revendication 1 ou 2,
**caractérisé en ce que**
la feuille ( 30, 32 ) ou le disque est en une matière plastique.

5. Joint à brosse suivant la revendication 1 ou 2,
**caractérisé en ce que**
la feuille ( 30, 32 ) ou le disque est en métal.

6. Joint à brosse suivant l'une des revendications précédentes,
**caractérisé en ce que**
la feuille ( 30, 32 ) ou le disque est perforé au moins par partie.

7. Joint à brosse suivant l'une des revendications précédentes,
**caractérisé en ce que**
la feuille ( 30, 32 ) ou le disque est fendu au moins par partie.

8. Joint à brosse suivant l'une des revendications précédentes,
**caractérisé en ce que**
la feuille ( 30, 32 ) ou le disque est, considéré suivant l'étendue en longueur des soies ( 12 ), exactement aussi long que celles-ci.

9. Joint à brosse suivant l'une des revendications précédentes,
**caractérisé en ce que**
la feuille ( 30, 32 ) ou le disque est, considéré suivant l'étendue en longueur des soies ( 12 ), plus court que celles-ci.

10. Joint à brosse suivant l'une des revendications précédentes,
dans lequel la feuille ( 30, 32 ) ou le disque a une structure d'appui des soies.

11. Joint à brosse suivant la revendication 10,
dans lequel la feuille ( 30, 32 ) ou le disque est ondulé.

12. Joint à brosse suivant la revendication 11,
dans lequel la feuille ( 30, 32 ) ou le disque est ondulé sinusoïdalement en forme de U ou en forme de triangle.

13. Turbomachine ayant un joint ( 10 ) à brosse suivant l'une des revendications 1 à 7.
